# EUROPÄISCHE PATENTSCHRIFT

(11) **EP 4 193 068 B1**
(45) Veröffentlichungstag und Bekanntmachung des Hinweises auf die Patenterteilung: **20.11.2024**
(21) Anmeldenummer: 21745963.5
(22) Anmeldetag: 15.07.2021
(51) Int. Cl.: F16B 5/02, F16B 35/06

(54) **BEFESTIGUNGSELEMENT UND EINSTELLSYSTEM UMFASSEND EIN BEFESTIGUNGSELEMENT**
FASTENING ELEMENT AND ADJUSTMENT SYSTEM COMPRISING A FASTENING ELEMENT
ÉLÉMENT DE FIXATION ET SYSTÈME D'AJUSTEMENT COMPRENANT UN ÉLÉMENT DE FIXATION

(30) Priorität: 06.08.2020 DE 102020120806
(43) Veröffentlichungstag der Anmeldung: 14.06.2023
(73) Patentinhaber: KAMAX Holding GmbH & Co. KG, 35315 Homberg (Ohm) (DE)
(72) Erfinder: SCHMITT, Thorsten, 35321 Laubach (DE)
(74) Vertreter: Müller Schupfner & Partner Patent- und Rechtsanwaltspartnerschaft mbB (Muc)
(86) Internationale Anmeldenummer: PCT/EP2021/069730
(87) Internationale Veröffentlichungsnummer: WO 2022/028841

(56) Entgegenhaltungen:
- DE-A1- 102017 216 362
- JP-A- H 094 623
- JP-A- S63 190 919
- US-A1- 2016 059 653
- US-B2- 7 370 868

## Beschreibung

Die Erfindung betrifft ein Befestigungselement, insbesondere eine Exzenterschraube, und ein Einstellsystem umfassend ein Befestigungselement.

Befestigungselemente sind bereits aus dem Stand der Technik bekannt. Diese werden häufig in einem Einstellsystem eingesetzt, um z.B. Fahrwerkteile eines Fahrzeugs einzustellen. Hierfür werden auf oder an dem Befestigungselement häufig exzentrische Elemente montiert oder angeformt, um so eine Einstellbarkeit zu erreichen. Um eine sichere Positionierung des exzentrischen Elements am Befestigungselement zu erreichen, wird dieses häufig über eine Nut drehfest am Befestigungselement geführt. Problematisch hierbei ist jedoch, dass durch die Nut eine besonders teure Herstellung des Befestigungselements, insbesondere aufgrund der Umformung des Gewindes des Befestigungselements, resultiert, denn das Umformwerkzeug zum Formen des Gewindes wird häufig durch die Nut, insbesondere durch dessen Auslauf, beschädigt und/oder stark abgenutzt, sodass diese Werkzeuge nur eine geringe Standzeit aufweisen.

Die DE 10 2017 216 362 A1 betrifft eine Schraube oder einen Schraubenschaft mit zumindest zwei Führungsnuten für eine aufschiebbare Exzenterscheibe und einem an zumindest einem Ende des Schaftes ausgebildeten Angriffsprofil für ein Werkzeug, welches derart bemessen ist, dass die Exzenterscheibe über dieses Angriffsprofil auf den Schraubenschaft aufschiebbar ist.

Die US 7 370 868 B2 betrifft eine Nockenbolzenanordnung zur Verwendung in einem Fahrzeugaufhängungssystem zum Einstellen der Radausrichtung des Fahrzeugs.

Die US 2016/059653 A1 betrifft eine Nockeneinstellbaugruppe, welche im Allgemeinen einen Nockenbolzen, eine Nockenscheibe und ein Antriebswerkzeug umfasst.

Es ist daher Aufgabe der vorliegenden Erfindung, eine kostengünstige Herstellung eines Befestigungselements, insbesondere für ein Einstellsystem, zu erreichen, wobei das Befestigungselement gleichzeitig eine hohe mechanische Belastbarkeit aufweisen soll.

Diese Aufgabe wird mit einem Befestigungselement gemäß Anspruch 1, mit einem Einstellsystem gemäß Anspruch 12 und mit einem Herstellungsverfahren für ein Befestigungselement gemäß Anspruch 13 gelöst. Vorteilhafte Weiterbildungen, Merkmale und Ausführungsformen ergeben sich aus den abhängigen Ansprüchen, der Beschreibung sowie aus den Figuren.

Gemäß einem Aspekt der Erfindung ist ein Befestigungselement, insbesondere ein Exzenterbefestigungselement und/oder eine Exzenterschraube, vorgesehen, umfassend ein Schraubelement, wobei sich das Schraubelement entlang einer Längsrichtung erstreckt, wobei das Schraubelement einen Gewindeabschnitt, einen Kopf und eine Nut aufweist, wobei sich die Nut insbesondere entlang der Längsrichtung erstreckt, wobei die Nut einen kopfnahen Endabschnitt und einen distalen Endabschnitt aufweist, wobei der kopfnahe Endabschnitt in Längsrichtung näher am Kopf angeordnet ist als der Gewindeabschnitt, wobei sich die Nut zumindest teilweise durch den Gewindeabschnitt erstreckt. Das erfindungsgemäße Befestigungselement dient insbesondere dazu, in einem Einstellsystem, vorteilhafterweise für ein Fahrzeug oder ein Fahrwerk eines Fahrzeugs, eingesetzt zu sein. Das Befestigungselement umfasst zumindest ein Schraubelement, welches sich in Längsrichtung erstreckt. Die Längsrichtung ist dabei insbesondere diejenige Richtung, in welche sich die Länge des Schraubelements bestimmt. Vorteilhafterweise ist dabei das Schraubelement zumindest im Wesentlichen rotationssymmetrisch um diese Längsrichtung ausgebildet. Unter "im Wesentlichen rotationssymmetrisch" ist insbesondere zu verstehen, dass auf ca. 70 % oder mehr der Länge, bevorzugt zumindest 80 %, des Schraubelements die äußere Kontur des Schraubelements rotationssymmetrisch um die Längsrichtung ist, wobei in diesem Zusammenhang insbesondere Gewinde oder Rändelungen eine Rotationssymmetrie nicht zerstören. Das erfindungsgemäße Schraubelement umfasst zumindest einen Gewindeabschnitt, einen Kopf und eine Nut. Der Kopf des Schraubelements bildet vorteilhafterweise einen distalen Endabschnitt in Längsrichtung des Schraubelements aus. Der Kopf des Schraubelements dient dabei dazu, dass über diesen ein Drehmoment um die Längsrichtung, insbesondere formschlüssig, auf das Schraubelement übertragbar ist. Hierzu verfügt der Kopf insbesondere über Werkzeugangriffsflächen, um eine Montage des Schraubelements und/oder eine generelle Verdrehung, z.B. für eine Einstellung eines Fahrwerks, zu erreichen. Beispielsweise kann der Kopf des Schraubelements daher Werkzeugangriffsflächen in Form eines Außensechskants und/oder eines Innensechskants und/oder eines Torx und/oder eines Kreuzschlitzes aufweisen. Der Gewindeabschnitt des Schraubelements hingegen bildet vorteilhafterweise ebenfalls einen distalen Endabschnitt des Schraubelements in Richtung der Längsrichtung aus, wobei dieser Endabschnitt bevorzugt der dem Kopf gegenüberliegende distale Endabschnitt in Längsrichtung ist. Der Gewindeabschnitt weist, insbesondere an seinem äußeren Umfang, ein Gewinde auf. Dieses Gewinde kann beispielsweise als metrisches Gewinde ausgebildet sein. Über den Gewindeabschnitt ist das Schraubelement in einfacher Weise kraftschlüssig mit weiteren Elementen verbindbar. Neben einem Gewindeabschnitt und einem Kopf verfügt das Schraubelement auch zumindest über eine Nut. Die Nut des Schraubelements dient insbesondere dazu, mit einem weiteren Element, insbesondere einem Exzenterelement, derart zusammenzuwirken, dass formschlüssig eine Verdrehung, insbesondere um die Längsrichtung, des weiteren Elements, insbesondere des Exzenterelements, relativ zum Schraubelement formschlüssig verhindert ist. Beispielsweise kann dies dadurch erreicht werden, dass eine Verdrehsicherungsstruktur des Exzenterelements in die Nut des Schraubelements derart eingreift, dass formschlüssig eine Verdrehung des Exzenterelements relativ zum Schraubelement um die Längsrichtung verhindert ist. Hierdurch kann in besonders einfacher Weise durch eine Verdrehung des Befestigungselements eine Einstellung des weiteren Elements, beispielsweise des Exzenterelements, erreicht werden. Die Nut des Schraubelements erstreckt sich insbesondere geradlinig und/oder entlang bzw. parallel der Längsrichtung. Hierdurch kann eine besonders einfache Fertigung der Nut erreicht werden. Die Nut des Schraubelements weist dabei einen kopfnahen Endabschnitt und einen distalen Endabschnitt auf. Der jeweilige Endabschnitt ist dabei derjenige Abschnitt, an dem die Nut ein frei auslaufendes Ende und/oder ein geschlossenes Ende aufweist. Ein geschlossenes Ende ist dabei derjenige Bereich der Nut, an dem die seitlich begrenzenden Konturen der Nut sich vereinigen bzw. zusammengeführt werden und somit der Verlauf der Nut entlang ihrer Erstreckung durch die Vereinigung beendet wird. Ein frei auslaufendes Ende hingegen ist ein Ende, bei dem sich die seitlich begrenzenden Konturen nicht vereinigen, sondern vielmehr beispielsweise eine Kante oder ein Absatz den Nutzverlauf beendet. Alternativ oder zusätzlich bevorzugt kann der jeweilige Endabschnitt auch bereits in denjenigen Bereichen vorliegen, in welchem die Nut, insbesondere der Bodenabschnitt der Nut, einen zunehmenden Abstand zur Längsrichtung bzw. Längsachse aufweist. In anderen Worten kann dies bedeuten, dass der Endabschnitt einer Nut auch durch denjenigen Bereich gebildet sein kann, in welchem die Nut entlang ihres Verlaufs eine Abnahme der Nuttiefe aufweist. Die Nut des erfindungsgemäßen Schraubelements ist dabei derart ausgebildet, dass diese sich zumindest teilweise durch den Gewindeabschnitt erstreckt. In anderen Worten kann dies bedeuten, dass zumindest ein Teil der Nut in dem Gewindeabschnitt verlaufend ist, sodass in einer Schnittebene durch den Gewindeabschnitt - mit einer Normalen parallel zur Längsrichtung - auch die Nut geschnitten wird. Der kopfnahe Endabschnitt der Nut des Schraubelements ist dabei derart angeordnet, dass dieser in Längsrichtung gesehen, zumindest teilweise, näher an dem Kopf angeordnet ist als der Gewindeabschnitt. In anderen Worten kann dies bedeuten, dass der kopfnahe Endabschnitt eine geringere Distanz in Längsrichtung zum Kopf aufweist, als der Gewindeabschnitt. Der für diese Beurteilung maßgebliche Gewindeabschnitt des Schraubelements ist dabei derjenige Gewindeabschnitt, durch welchen sich die zumindest eine Nut des Schraubelements erstreckt. Vorteilhafterweise weist das erfindungsgemäße Schraubelement nicht nur eine derartige Nut auf, sondern vielmehr können auch mehrere derartige Nuten angeordnet sein, wobei diese jeweils einige oder alle Merkmale der beschrieben Nut aufweisen können. Vorteilhafterweise sind die Nuten dabei äquidistant um den Umfang des Schraubelements verteilt bzw. angeordnet. Durch das Ausbilden des kopfnahen Endabschnitts in einem Bereich, welcher näher am Kopf angeordnet ist als der Gewindeabschnitt, kann erreicht werden, dass der kopfnahe Endabschnitt der Nut zumindest teilweise, bevorzugt vollständig, gewindefrei ist. Hierdurch kann insbesondere beim Walzen des Gewindes eine deutlich höhere Standzeit des Werkzeugs erreicht werden, so dass eine kostengünstige Fertigung des Befestigungselements resultiert. Darüber hinaus können hierdurch auch noch die Kerbwirkungseinflüsse des kopfnahen Endabschnitts reduziert werden, so dass gleichzeitig eine hohe mechanische Belastbarkeit der Schraube resultiert.

Vorteilhafterweise erstreckt sich die Nut vollständig durch den Gewindeabschnitt. Unter einem vollständigen Erstrecken durch den Gewindeabschnitt ist dabei zu verstehen, dass keine Schnittebene durch den Gewindeabschnitt existiert, welche eine Normale parallel zur Längsrichtung aufweist, die nicht auch die Nut schneidet. Zusätzlich kann sich die Nut jedoch auch noch über weitere Bereiche des Schraubelements erstrecken, so dass sich die Nut auch über den Gewindeabschnitt hinaus erstrecken kann. Durch diese Art der Ausbildung der Nut kann eine besonders leichte Montage eines Exzenterelements innerhalb der Nut erfolgen.

Bevorzugt weist die Nut in einer Schnittebene, dessen Normale parallel zur Längsrichtung ist, einen gerundeten Boden- und/oder gerundete Seitenabschnitte auf, wobei der Boden- und/oder der Seitenabschnitt insbesondere einen, vorteilhafterweise konstanten, Rundungsradius aufweisen. Der Bodenabschnitt der Nut ist dabei derjenige Abschnitt der Nut, welcher zur Längsrichtung hingewandt ist. In anderen Worten begrenzt der Bodenabschnitt die Nut in Richtung zur Längsrichtung hin. Die Seitenabschnitte der Nut sind diejenigen Teile der Nut, welche eine seitliche Kontur auf der Fläche bzw. den Flächen ausbilden, in welche die Nut eingebracht ist. Die Seitenabschnitte begrenzen daher die Nut seitlich relativ zum Verlauf der Nut. Erfindungsgemäß liegt ein Verhältnis des Rundungsradius des Boden- und/oder des Seitenabschnitts der Nut zu dem Durchmesser des Gewindeabschnitts in einem Bereich von 0,1 bis 0,5, bevorzugt in einem Bereich von 0,2 bis 0,3. Bei einem Verhältnis im Bereich von 0,1 bis 0,5 kann ein besonders mechanisch belastbares Schraubelement erreicht werden. Bei einem Verhältnis im Bereich von 0,2 bis 0,3 hat die Anmelderin überraschend herausgefunden, dass hierdurch eine besonders lange Standzeit des Werkzeugs, insbesondere des Umformwerkzeugs, für das Formen der Nut und/oder des Gewindeabschnitts erreicht werden kann. Besonders zweckmäßig ist es, um eine kostengünstige Fertigung zu erreichen, wenn der Rundungsradius des Boden- und der Seitenabschnitte gleich ist.

Zweckmäßigerweise ist das Schraubelement durch ein Umformverfahren hergestellt, und/oder wobei die Nut mittels eines Umformverfahrens, insbesondere geprägt und oder gewalzt, und/oder mit einem spanabhebenden Verfahren hergestellt ist. Durch ein Herstellen des Schraubelements mittels eines Umformverfahrens kann eine besonders mechanisch belastbare Struktur innerhalb des Schraubelements erreicht werden, so dass dieses ein hohes Maß an mechanischer Belastbarkeit aufweist. Bei einem Herstellen der Nut mittels Prägen oder Walzen oder einem anderen Umformverfahren kann ebenfalls ein vorteilhafter "Faserverlauf' im Schraubelement erreicht werden, so dass hierdurch ebenfalls die Festigkeit des Schraubelements gesteigert und/oder zumindest positiv beeinflusst werden kann. Bei einer Herstellung der Nut mittels eines spanabhebenden Fertigungsverfahrens kann eine besonders hohe Genauigkeit der Geometrieherstellung erreicht werden, so dass hierdurch eine besonders mechanisch belastbare formschlüssige Verdrehsicherung mit einem Exzenterelement erreicht werden kann. Ein spanabhebendes Verfahren kann beispielsweise ein Schleifverfahren, ein Fräsverfahren, Stoßen oder Hobeln sein.

Zweckmäßigerweise weist das Schraubelement einen Mitnahmebereich auf, wobei der Mitnahmebereich insbesondere in Längsrichtung näher an dem Kopf angeordnet ist als der kopfnahe Endabschnitt der Nut und/oder als der Gewindeabschnitt. Der Mitnahmebereich des Schraubelements dient dabei während der Fertigung dazu, bei einem Walzen des Gewindes, insbesondere mittels Walzbacken, das Schraubelement in Rotation zu versetzen. In anderen Worten dient der Mitnahmebereich des Schraubelements dazu, während des Herstellungsverfahrens des Gewindes eine ausreichende Rotation des Schraubelementrohlings bzw. des Schraubelements sicherzustellen. Der Mitnahmebereich ist dabei insbesondere derart angeordnet, dass dieser in der Längsrichtung gesehen näher an dem Kopf angeordnet ist als der kopfnahe Endabschnitt der Nut und/oder als der Gewindeabschnitt. Hierdurch kann erreicht werden, dass der Mitnahmebereich nutfrei ausgebildet werden kann. Unter einem nutfreien Ausbilden ist dabei zu verstehen, dass die Nut sich nicht in den Mitnahmebereich erstreckt. Durch das "nutfreie" Ausbilden des Mitnahmebereichs kann eine besonders einfache Fertigung des Mitnahmebereichs und/oder ein besonders mechanisch belastbarer Mitnahmebereich erreicht werden. Durch das Ausbilden des Mitnahmebereichs in Längsrichtung näher am Kopf als der kopfnahe Endabschnitt der Nut und/oder als der Gewindeabschnitt kann auch noch erreicht werden, dass bei einem Walzen des Gewindes immer ausreichend Kontaktbereich für die Walzbacken im Mitnahmebereich vorhanden ist. Daher kann hierdurch in besonders effektiver Weise eine hohe und/oder sichere Drehmomentübertragung zwischen den Walzbacken und dem Mitnahmebereich erreicht werden. Vorteilhafterweise ist der Mitnahmebereich in positive und/oder in negative Längsrichtung durch Absätze und/oder Ringnuten begrenzt. In anderen Worten können die in Längsrichtung gesehenen distalen Enden des Mitnahmebereichs nächstliegenden zu Absätzen oder zu Ringnuten angeordnet sein. Hierdurch kann eine klare Abgrenzung zu anderen Bereich des Schraubelements erreicht werden, sodass sichergestellt werden kann, dass diese Bereiche bei der Fertigung des Schraubelements und/oder des Befestigungselements allenfalls geringfügig für die Drehmomentübertragung genutz werden.

Vorteilhafterweise ist der Mitnahmebereich derart ausgebildet, sodass dieser rotationssymmetrisch um die Längsrichtung ist, insbesondere zylindrisch. Hierdurch kann eine besonders einfache und kostengünstige Ausgestaltung des Mitnahmebereichs erreicht werden.

Vorteilhafterweise liegt der kopfnahe Endabschnitt der Nut in Längsrichtung zumindest teilweise, bevorzugt vollständig, zwischen dem Gewindeabschnitt und dem Kopf und/oder ist zumindest einen Mindestabstand vom Kopf und/oder vom Gewindeabschnitt in Längsrichtung beabstandet. Der Mindestabstand beträgt dabei bevorzugt 0,5 mm, 1 mm oder 1,5 mm. Alternativ oder zusätzlich bevorzugt kann der Mindestabstand auch das 0,1 fache des Außendurchmessers des Gewindeabschnitts betragen. Durch das Auslaufen der Nut in einem Abstand vom Gewindeabschnitt und vom Kopf in Längsrichtung kann eine besonders gute Verteilung der Kerbwirkung in Längsrichtung erreicht werden.

In einer vorteilhaften Weiterbildung liegt der kopfnahe Endabschnitt der Nut in Längsrichtung zumindest teilweise, bevorzugt vollständig, zwischen dem Gewindeabschnitt und dem Mitnahmebereich. Maßgeblich hierfür ist insbesondere derjenige Abschnitt des kopfnahen Endabschnitts, in welchem die Nut in Längsrichtung gesehen ihr finales distales Ende ausbildet. Alternativ oder zusätzlich bevorzugt kann hierfür auch derjenige Teil des kopfnahen Endabschnitts der Nut maßgeblich sein, in welchem die Nut entlang ihres Verlaufs in Längsrichtung gesehen anfängt, eine zunehmende Distanzierung zur Längsrichtung aufzuweisen. In anderen Worten kann alternativ bevorzugt auch derjenige Endabschnitt der Nut maßgeblich sein, in welchem diese anfängt, ihre ursprüngliche und/oder minimale Distanz zur Längsrichtung zu verlieren. Durch das Ausbilden des Endabschnitts in Längsrichtung zwischen dem Gewindeabschnitt und dem Mitnahmebereich kann in einfacher Weise ein besonders kerbwirkungsarmer Auslauf der Nut erreicht werden. Darüber hinaus kann hierdurch auch eine Schwächung des Mitnahmebereichs verhindert oder reduziert werden.

Vorteilhafterweise weist der Mitnahmebereich den gleichen Kern- und/oder Außendurchmesser auf wie der Gewindeabschnitt. In anderen Worten kann der Kern- und/oder Außendurchmesser des Gewindeabschnitts dem jeweiligen Kernund/oder Außendurchmesser des Mitnahmebereichs entsprechen. Der Kerndurchmesser ist dabei insbesondere das Doppelte des kleinstmöglichen Abstands des außen liegenden umfänglichen maßgeblichen Bereichs zur Längsrichtung. Der Außendurchmesser des Mitnahmebereichs oder des Gewindeabschnitts hingegen ist insbesondere der doppelte Abstand des weit entferntesten außenliegenden Bereichs des Mitnahmebereichs und/oder des Gewindeabschnitts zur Längsrichtung. Die Definition des Kern- und/oder des Außendurchmessers sind dabei insbesondere bei einem Gewinde als Kerndurchmesser und als Außendurchmesser bekannt. Alternativ oder zusätzlich bevorzugt kann auch der Flankendurchmesser des Mitnahmebereichs der gleiche sein wie der Flankendurchmesser des Gewindeabschnitts.

In einer bevorzugten Ausführungsform weist der Mitnahmebereich an seinem äu-ßeren Umfang Mitnahmestrukturen auf, wobei die Mitnahmestrukturen eine formschlüssige Drehmomentübertragung um die Längsrichtung ermöglichen. Die Mitnahmestrukturen können dabei Strukturen sein, welche während und/oder vor dem Walzprozess des Gewindes in den Mitnahmebereich eingebracht worden sind. Diese Mitnahmestrukturen dienen daher dazu, formschlüssig ein Drehmoment von den Walzbacken um die Längsrichtung auf das Befestigungselement und/oder das Schraubelement zu übertragen. Hierdurch kann eine besonders sichere Drehmomentübertragung erreicht werden, so dass eine besonders sichere und kostengünstige Fertigung des Gewindes mittels eines Umformverfahrens ermöglicht wird, insbesondere mittels eines Walzverfahrens. Beispielsweise ist es daher hierdurch möglich, eine Schraubenfestigkeitsklasse des Schraubelements von > 10.9 zu erreichen, insbesondere von mindestens 12.9.

Zweckmäßigerweise ist die Mitnahmestruktur eine Keilverzahnung und/oder ein Gewinde. Alternativ oder zusätzlich bevorzugt kann die Mitnahmestruktur auch eine Rändelung und/oder ein Mehrzahn sein. Durch diese Mitnahmestruktur(en) kann eine besonders sichere und einfache Drehmomentübertragung während des Umformprozesses des Gewindeabschnitts erreicht haben.

Vorteilhafterweise ist die Mitnahmestruktur, wenn diese als ein Gewinde ausgebildet ist, derart angeordnet und/oder ausgebildet, dass die Gewindegänge des Gewindes in der Mitnahmestruktur eine direkte Verlängerung der Gewinde bzw. des Gewindegangs des Gewindeabschnitts des Schraubelements sind oder ist. In anderen Worten kann der oder die Gewindegänge der Mitnahmestruktur derart angeordnet sein, dass diese in Rotationsrichtung um die Längsachse gesehen kein rotatorischen Versatz zu der gedachten Weiterführung des oder der Gewindegänge des Gewindeabschnitts des Schraubelements aufweisen. Hierdurch kann auch der Mitnahmebereich zur Befestigung eingesetzt werden, sodass hierdurch in einfacher und kostengünstiger Weise eine weitere Befestigungsmöglichkeit an dem Schraubelement erreicht bzw. vorgesehen werden kann.

Erfindungsgemäß hat das Schraubelement eine Festigkeitsklasse von >= 10.9. Durch das Ausbilden des Schraubelements derart, dass dieses eine Festigkeitsklasse über 10.9 aufweist, kann erreicht werden, dass das Schraubelement auch in hochfesten Schraubverbindung eingesetzt werden. Vorteilhafterweise weist daher der Werkstoff des Schraubelements eine Zugfestigkeit Rₘ in N/mm² von mehr als 1.000 auf und/oder eine Bruchdehnung A in % von 9. Maßgeblich für eine höhere Festigkeitsklasse ist hierbei insbesondere die Zugfestigkeit des verwendeten Werkstoffs des Schraubelements. Für die Beurteilung der Zugfestigkeit ist insbesondere derjenige Werkstoff maßgeblich, welcher in dem Gewindeabschnitt, dem Kopf und/oder im Bereich der Nut eingesetzt ist.

Vorteilhafterweise ist der kopfnahe Endabschnitt der Nut, insbesondere in Längsrichtung gesehen, in einer um die Längsrichtung umlaufenden Ringnut angeordnet. Hierdurch kann eine besonders geringe Kerbwirkung durch den Endabschnitt erreicht werden, sodass insbesondere auch die Biegefestigkeit der Schraube durch die Kerbwirkung des Endabschnitts der Nut lediglich geringfügig negativ beeinflusst wird. Darüber hinaus kann hierdurch auch noch ein hohes Maß an Elastizität erreicht werden, sodass das Schraubelement beziehungsweise das Befestigungselement ein hohes Maß an Dauerfestigkeit aufweist.

Zweckmäßigerweise weist das Befestigungselement eine Exzenterstruktur auf, wobei die Exzenterstruktur rotationsfest um die Längsrichtung zu dem Schraubelement ist. Die Exzenterstruktur weist insbesondere eine äußere umlaufende Struktur und/oder Kontur auf, welche exzentrisch und oder nockenförmig zur Längsrichtung ist. Die Exzenterstruktur ist in einem montierten bzw. festgelegten Zustand derart angeordnet, dass diese rotationsfest um die Längsrichtung relativ zum Schraubelement ist. In anderen Worten kann zwischen der Exzenterstruktur und dem Schraubelement ein Drehmoment um die Längsrichtung übertragen werden, insbesondere formschlüssig. Hierdurch kann das Befestigungselement durch die exzentrische oder nockenartige Struktur der Exzenterstruktur zum Einstellen, beispielsweise eines Fahrwerkelements eines Fahrzeugs, eingesetzt werden.

Vorteilhafterweise ist die Exzenterstruktur einstückig mit dem Schraubelement ausgebildet oder alternativ bevorzugt kann die Exzenterstruktur auch ein separates Bauteil zum Schraubelement sein. Sollte die Exzenterstruktur einstückig mit dem Schraubelement ausgebildet sein, so kann in besonders einfacher Weise eine mechanisch belastbare Anbindung der Exzenterstruktur an das Befestigungselement bzw. das Schraubelement erreicht werden. Besonders bevorzugt sind die Exzenterstruktur und das Schraubelement aus demselben bzw. einem einzigen Rohling durch ein Ur- und/oder Umformverfahren hergestellt. Daher ist das Exzenterelement bevorzugt gerade nicht stoffschlüssig an das Schraubelement gefügt. In anderen Worten kann es daher bevorzugt sein, dass das Befestigungselement einstückig ausgebildet ist, um eine besonders hohe mechanische Belastbarkeit zu ermöglichen. Um jedoch Fertigungskosten einzusparen, kann es vorteilhaft sein, wenn die Exzenterstruktur als ein separates Bauteil ausgebildet ist. Hierbei ist es bevorzugt, wenn eine formschlüssige Drehmomentübertragung um die Längsrichtung zwischen der Exzenterstruktur und dem Schraubelement in einem montierten Zustand erfolgt. Vorteilhafterweise kann die Exzenterstruktur alternativ oder zusätzlich bevorzugt auch auf einem Bereich des Schraubelements aufgeschrumpft, gepresst und/oder verstemmt sein, um eine Verliersicherung der Exzenterstruktur in Längsrichtung des Schraubelements zu erreichen.

In einer bevorzugten Ausführungsform ist die Exzenterstruktur in Längsrichtung näher an dem Kopf angeordnet als der kopfnahe Endabschnitt der Nut und/oder als der Mitnahmebereich und/oder als der Gewindeabschnitt, wobei die Exzenterstruktur vorteilhafterweise unmittelbar anschließend am Kopf in Längsrichtung angeordnet ist. Durch das Anordnen der Exzenterstruktur in Längsrichtung in einer besonderen Nähe zum Kopf kann erreicht werden, dass zwischen dem Kopf und dem Exzenterelement nur eine geringe relative Verdrehung um die Längsrichtung bei einer Betätigung erfolgt, sodass hierdurch ein besonders hohes Maß an Einstellgenauigkeit erreicht werden kann. Darüber hinaus oder alternativ bevorzugt kann durch das Vorsehen der Exzenterstruktur in Längsrichtung näher am Kopf als der kopfnahe Endabschnitt der Nut und/oder als der Mitnahmebereich und/oder als der Gewindeabschnitt auch erreicht werden, dass diese Bereiche nicht durch ein einstellendes bzw. betätigendes Drehmoment belastet werden, welches am Kopf des Schraubelements eingeleitet wird. Daher kann durch die vorhergehend beschriebene Anordnung der Exzenterstruktur in Längsrichtung ein besonders mechanisch belastbares Schraubelement erreicht werden.

Ein weiterer Aspekt der Erfindung kann ein Einstellsystem betreffen, welches ein Befestigungselement wie vorgehend und nachfolgend beschrieben umfasst, sowie ein Exzenterelement, wobei das Exzenterelement eine Verdrehsicherungsstruktur aufweist, wobei die Verdrehsicherungsstruktur derart in die Nut eingreift, dass eine Drehung des Exzenterelements um die Längsrichtung relativ zum Schraubelement formschlüssig verhindert ist. Das Exzenterelement weist insbesondere an seinem äußeren Umfang eine exzentrische und/oder nockenartige Struktur auf und, vorteilhafter Weise an seinem inneren Umfang, eine Verdrehsicherungsstruktur, welche in einem montierten Zustand in die Nut eingreift, sodass formschlüssig eine Verdrehung des Exzenterelements relativ zum Schraubelement des Befestigungselements formschlüssig verhindert ist. Die äußere exzentrische Struktur des Exzenterelements ist dabei insbesondere exzentrisch zur Längsrichtung ausgebildet. Durch das Vorsehen eines Exzenterelements kann in einfacher weise zusätzlich oder alternativ zur Exzenterstruktur eine Einstellmöglichkeit, beispielsweise für ein Fahrwerksteil eines Fahrzeugs, durch das Einstellsystem geschaffen werden. Das Einstellsystem dient daher insbesondere dazu, beispielsweise in einem Fahrzeug, verwendet zu werden. Beispielsweise kann über ein derartiges Einstellsystem ein Lenker in einem Fahrwerk und/oder einer Radaufhängung eines Fahrzeugs eingestellt werden.

Vorteilhafterweise sind das Exzenterelement und die Exzenterstruktur gleichförmig exzentrisch, wobei insbesondere die Projektion der äußeren Kontur des Exzenterelements und die Außenkontur der Exzenterstruktur in Längsrichtung deckungsgleich sind. Maßgeblich für die Beurteilung der Deckungsgleichheit und der Gleichförmigkeit ist dabei insbesondere der montierte Zustand der Exzenterstruktur und des Exzenterelements relativ zum Schraubelement. Der montierte Zustand ist generell insbesondere derjenige Zustand, bei welchem sämtliche Elemente des Befestigungselements und/oder des Einstellsystems ihre endgültige Position zueinander, insbesondere in Längsrichtung, eingenommen haben. Daher greift insbesondere die Verdrehsicherungsstruktur des Exzenterelements in dem montierten Zustand zumindest in die eine Nut des Schraubelements ein. Unter "gleichförmig exzentrisch" ist dabei zu verstehen, dass die Exzentrizität sowohl des Exzenterelements als auch der Exzenterstruktur relativ zur Längsrichtung gleichförmig und gleich gerichtet ausgebildet sind. Durch diese Gleichförmigkeit kann dabei erreicht werden, dass bei einem Verdrehen des Schraubelements beziehungsweise des Befestigungselements eine gleichförmige und gleichzeitige Einstellung durch das Exzenterelement und durch die Exzenterstruktur erreicht werden kann.

Ein weiterer Aspekt der Erfindung betrifft ein Verfahren zur Herstellung eines Befestigungselements wie vorgehend und nachfolgend beschrieben. Ein derartiges Verfahren zur Herstellung umfasst dabei die Schritte:
- Bereitstellen eines Rohlings
- Formen eines Gewindeabschnitts durch Umformen, insbesondere durch Walzen;
- Insbesondere Umformung des Rohlings derart, dass ein Kopf entsteht;
- Umformen des Rohlings derart, dass eine Nut entsteht, wobei die Nut einen kopfnahen Endabschnitt und einen distalen Endabschnitt aufweist, wobei der kopfnahe Endabschnitt in Längsrichtung näher an dem Kopf angeordnet ist als der Gewindeabschnitt, wobei sich die Nut zumindest teilweise durch den Gewindeabschnitt erstreckt. Zusätzlich kann ein Bearbeiten des Rohlings mit einem spanabhebenden Verfahren, insbesondere Fräsen, zum Formen von z.B. Nuten erfolgen.

Durch dieses Herstellungsverfahren können in einfacher Weise die bereits bezüglich des Befestigungselements dargelegten Vorteile erreicht werden. Insbesondere während des Walzens des Gewindeabschnitts kann dabei ein dreiteiliges Walzwerkzeug eingesetzt werden, wobei insbesondere durch einen Teil dieses Walzwerkzeugs der Gewindeabschnitt umgeformt wird, vorteilhafterweise durch einen weiteren Teil des Walzwerkzeugs eine Ringnut in das Schraubelement eingebracht wird und/oder keinerlei Umformungen des Schraubelements erfolgt und in einem dritten Teil kann insbesondere der Mitnahmebereich des Schraubelements umformend bearbeitet werden und/oder eine Drehmomentübertragung, insbesondere formschlüssig und/oder alternativ bevorzugt reibschlüssig, zwischen dem Walzwerkzeug und dem Mitnahmebereich erfolgen. Ein weiterer nicht beanspruchter Aspekt der Erfindung kann daher auch ein Walzwerkzeug, insbesondere eine Walzbacke, oder ein Walzwerkzeugsatz betreffen.

In einer bevorzugten Ausführungsform umfasst das Verfahren zur Herstellung die weiteren Schritte: Formen und/oder Umformen eines Mitnahmebereichs mit zumindest einer Mitnahmestruktur, wobei die Mitnahmestruktur(en) insbesondere in demselben Verfahrensschritt, insbesondere durch Walzen, geformt werden indem auch der Gewindeabschnitt durch Walzen geformt wird. Hierdurch kann ein besonders kostengünstiges und mechanisch belastbares Befestigungselement erreicht werden.

Weitere Vorteile und Merkmale der vorherigen Erfindung ergeben sich aus der Nachfolgenden Beschreibung mit Bezug auf die Figuren. Einzelne Merkmale der dargestellten Ausführungsformen könne dabei auch in anderen Ausführungsformen eingesetzt werden, sofern dies nicht ausdrücklich ausgeschlossen wurde. Es zeigen:
- Figur 1: eine Ansicht mit einem Ausbruch eines Einstellsystems;
- Figur 2: eine Teilansicht im Bereich des kopfnahen Endabschnitts der Nut aus dem Schraubelement; und
- Figur 3: eine Ansicht auf ein Schraubelement in Längsrichtung.

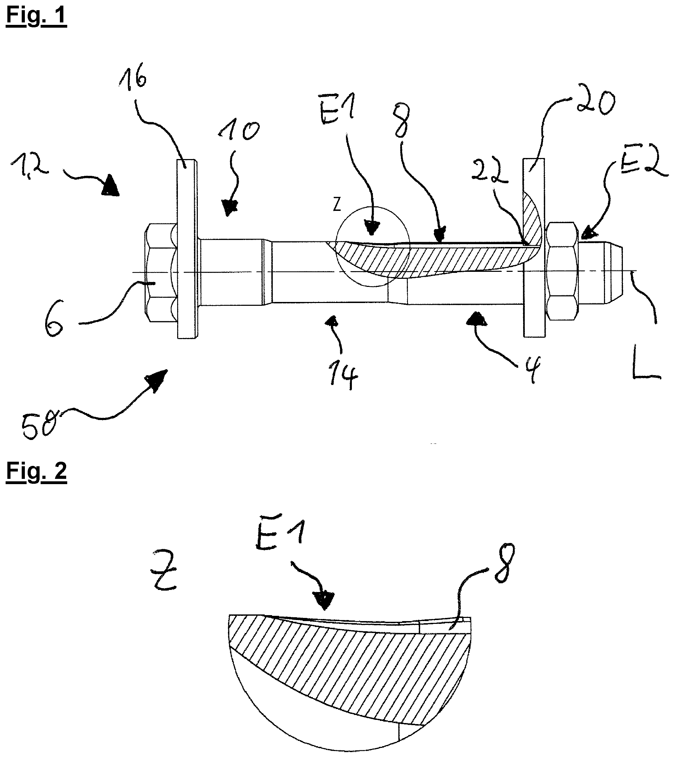

In **Figur 1** ist ein Einstellsystem 50 gezeigt, welches ein Befestigungselement 1 und ein Exzenterelement 20 umfasst. Das Befestigungselement 1 umfasst ein Schraubelement 2, welches einstückig mit einer Exzenterstruktur 16 ausgebildet ist. Daher ist in der Figur 1 das Befestigungselement 1 einstückig ausgebildet. In Längsrichtung L ist ein distaler Endbereich des Schraubelements 2 durch den Kopf 6 gebildet. Der Kopf 6 ist dabei als ein Außensechskant ausgebildet. Die Exzenterstruktur 16 des Befestigungselements 1 ist dabei unmittelbar anschließend am Kopf in Längsrichtung L angeordnet. Nächstliegend in Längsrichtung L zur Exzenterstruktur 16 ist der Mitnahmebereich 10 angeordnet. Zwischen dem Mitnahmebereich 10 und dem Gewindeabschnitt 4 des Schraubelements 2 befindet sich eine breite Ringnut 14. Teilweise umgebend um den Gewindeabschnitt 4 des Schraubelements 2 ist das Exzenterelement 20 angeordnet, wobei das Exzenterelement 20 eine Verdrehsicherungsstruktur 22 aufweist, welche in die Nut 8 des Schraubelements 2 eingreift. Die Nut 8 weist dabei ein distalen Endabschnitt E2 in Längsrichtung L auf und einen kopfnahen Endabschnitt E1 in Längsrichtung. Der kopfnahe Endabschnitt E1 befindet sich in der Ringnut 14. Der distale Endabschnitt E2 der Nut 8 hingegen läuft unterhalb der montierten Mutter aus und ist daher in der Figur 1 nicht erkennbar. In der Figur 1 ist mit Z eine Detailansicht angedeutet, welche detaillierter in der Figur 2 dargestellt ist.

In **Figur 2** ist die in der Figur 1 mit Z markierte Detailansicht genauer dargestellt. In der Figur 2 ist daher der kopfnahe Endabschnitt E1 der Nut 8 zu erkennen, welcher insbesondere großteilig und/oder - wie in der Figur 2 dargestellt - vollständig innerhalb der Ringnut 14 angeordnet ist.

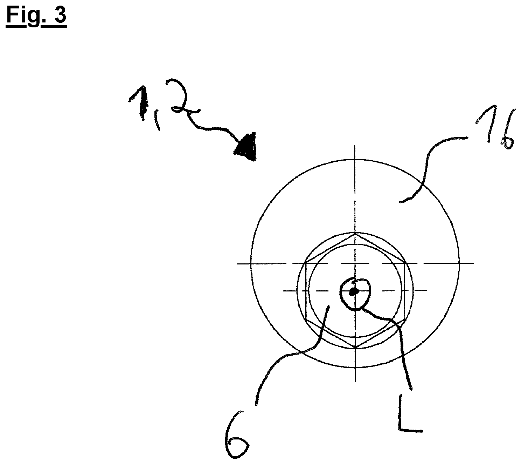

In **Figur 3** ist eine Ansicht eines Schraubelements 2 eines Befestigungselements 1 in Längsrichtung L gezeigt. In der Figur 3 ist dabei die Exzenterstruktur 16 des Befestigungselements 1 zu sehen. Aufgrund des Umstandes, dass die Außenkontur eines Exzenterelements 20 in Längsrichtung L deckungsgleich mit der Exzenterstruktur 16 sein kann, könnte die äußere Kontur der Exzenterstruktur 16 auch der äußeren Kontur eines ansonsten in Figur 3 nicht erkennbaren Exzenterelements 20 entsprechen.

### Bezugszeichenliste:

- 1: - Befestigungselement
- 2: - Schraubelement
- 4: - Gewindeabschnitt
- 6: - Kopf
- 8: - Nut
- 10: - Mitnahmebereich
- 14: - Ringnut
- 16: - Exzenterstruktur
- 20: - Exzenterelement
- 22: - Verdrehsicherungsstruktur
- 50: - Einstellsystem
- E1: - kopfnaher Endabschnitt der Nut (8)
- E2: - distaler Endabschnitt der Nut (8)
- L: - Längsrichtung bzw. Längsachse

## Patentansprüche

1. Befestigungselement (1) umfassend ein Schraubelement (2),
wobei sich das Schraubelement (2) entlang einer Längsrichtung (L) erstreckt,
wobei das Schraubelement (2) einen Gewindeabschnitt (4), einen Kopf (6) und eine Nut (8) aufweist,
wobei sich die Nut (8) insbesondere entlang der Längsrichtung (L) erstreckt,
wobei die Nut (8) einen kopfnahen Endabschnitt (E1) und einen distalen Endabschnitt (E2) aufweist,
wobei der kopfnahe Endabschnitt (E1) in Längsrichtung (L) näher an dem Kopf (6) angeordnet ist als der Gewindeabschnitt (4),
wobei sich die Nut (8) zumindest teilweise durch den Gewindeabschnitt (4) erstreckt,
wobei das Schraubelement (2) eine Festigkeitsklasse von größer als 10.9 oder gleich 10.9 hat,
wobei die Nut (8) in einer Schnittebene, dessen Normale parallel zur Längsrichtung (L) ist, einen gerundeten Boden- und/oder gerundete Seitenabschnitte aufweist,
wobei ein Verhältnis des Rundungsradius des Boden- und/oder des Seitenabschnitts der Nut (8) zu dem Durchmesser des Gewindeabschnitts (4) in einem Bereich von 0,1 bis 0,5, bevorzugt in einem Bereich von 0,2 bis 0,3, liegt,
**dadurch gekennzeichnet, dass**
die Nut (8) geprägt und/oder gewalzt ist.

2. Befestigungselement (1) gemäß Anspruch 1,
wobei sich die Nut (8) vollständig durch den Gewindeabschnitt (4) erstreckt

3. Befestigungselement (1) gemäß einem der vorhergehenden Ansprüche,
wobei das Schraubelement (2) einen Mitnahmebereich (10) aufweist,
wobei der Mitnahmebereich (10) insbesondere in Längsrichtung (L) näher an dem Kopf (6) angeordnet ist als der kopfnahe Endabschnitt (E1) der Nut (8) und/oder als der Gewindeabschnitt (4).

4. Befestigungselement (1) gemäß einem der vorhergehenden Ansprüche,
wobei der kopfnahe Endabschnitt (E1) der Nut (8) in Längsrichtung (L) zwischen dem Gewindeabschnitt (4) und dem Mitnahmebereich (10) liegt.

5. Befestigungselement (1) gemäß einem der vorhergehenden Ansprüche,
wobei der Mitnahmebereich (10) den gleichen Kern- und/oder Außendurchmesser aufweist wie der Gewindeabschnitt (4).

6. Befestigungselement (1) gemäß einem der vorhergehenden Ansprüche,
wobei der Mitnahmebereich (10) an seinem äußeren Umfang Mitnahmestrukturen aufweist,
wobei die Mitnahmestrukturen eine formschlüssige Drehmomentübertragung um die Längsrichtung (L) ermöglichen.

7. Befestigungselement (1) gemäß einem der vorhergehenden Ansprüche,
wobei die Mitnahmestrukturen eine Keilverzahnung und/oder ein Gewinde ist.

8. Befestigungselement (1) gemäß einem der vorhergehenden Ansprüche,
wobei der kopfnahe Endabschnitt (E1) der Nut (8), insbesondere in Längsrichtung (L) gesehen, in einer um die Längsrichtung (L) umlaufenden Ringnut (14) angeordnet ist.

9. Befestigungselement (1) gemäß einem der vorhergehenden Ansprüche,
wobei das Befestigungselement (1) eine Exzenterstruktur (16) aufweist,
wobei die Exzenterstruktur (16) rotationsfest um die Längsrichtung (L) zu dem Schraubelement (2) ist.

10. Befestigungselement (1) gemäß einem der vorhergehenden Ansprüche,
wobei die Exzenterstruktur (16) einstückig mit dem Schraubelement (2) ausgebildet, oder
wobei die Exzenterstruktur (16) ein separates Bauteil ist.

11. Befestigungselement (1) gemäß einem der vorhergehenden Ansprüche,
wobei die Exzenterstruktur (16) in Längsrichtung (L) näher an dem Kopf (6) angeordnet ist als der kopfnahe Endabschnitt (E1) der Nut (8) und/oder als der Mitnahmebereich (10) und/oder als der Gewindeabschnitt (4),
wobei die Exzenterstruktur (16) vorteilhafterweise unmittelbar anschließend am Kopf (6) in Längsrichtung (L) angeordnet ist.

12. Einstellsystem (50) umfassend ein Befestigungselement (1) gemäß einem der Ansprüche 1 bis 11 und ein Exzenterelement (20),
wobei das Exzenterelement (20) eine Verdrehsicherungsstruktur (22) aufweist,
wobei die Verdrehsicherungsstruktur (22) derart in die Nut (8) eingreift, dass eine Drehung des Exzenterelements (20) um die Längsrichtung (L) relativ zum Schraubelement (2) formschlüssig verhindert ist.

13. Verfahren zur Herstellung eines Befestigungselements (1) nach einem der vorhergehenden Ansprüche 1 bis 11 umfassend die Schritte:
- Bereitstellen eines Rohlings;
- Walzen eines Gewindeabschnitts (4);
- Insbesondere Umformen des Rohlings derart, dass ein Kopf (6) entsteht;
- Umformen des Rohlings derart, dass eine Nut (8) entsteht,
wobei die Nut (8) einen kopfnahen Endabschnitt (E1) und einen distalen Endabschnitt (E2) aufweist,
wobei der kopfnahe Endabschnitt (E1) in Längsrichtung (L) näher an dem Kopf (6) angeordnet ist als der Gewindeabschnitt (4),
wobei die Nut (8) sich zumindest teilweise durch den Gewindeabschnitt (4) erstreckt.

## Claims

1. Fastening element (1) comprising a screw element (2),
wherein the screw element (2) extends along a longitudinal direction (L),
wherein the screw element (2) has a threaded section (4), a head (6) and a groove (8),
wherein the groove (8) extends in particular along the longitudinal direction (L),
wherein the groove (8) has an end section (E1) close to the head and a distal end section (E2),
wherein the end section (E1) close to the head is arranged closer to the head (6) in the longitudinal direction (L) than the threaded section (4),
wherein the groove (8) extends at least partially through the threaded section (4),
wherein the screw element (2) has a strength class of greater than or equal to 10.9,
wherein the groove (8) has a rounded bottom and/or rounded side sections in a sectional plane whose normal is parallel to the longitudinal direction (L),
wherein a ratio of the radius of curvature of the bottom and/or side section of the groove (8) to the diameter of the threaded portion (4) is in a range from 0.1 to 0.5, preferably in a range from 0.2 to 0.3,
**characterized in that** the groove (8) is embossed and/or rolled.

2. Fastening element (1) according to claim 1,
wherein the groove (8) extends completely through the threaded section (4).

3. Fastening element (1) according to one of the preceding claims,
wherein the screw element (2) has an entrainment area (10),
wherein the entrainment area (10) is arranged closer to the head (6), in particular in the longitudinal direction (L), than the end section (E1) of the groove (8) close to the head and/or than the threaded section (4).

4. Fastening element (1) according to one of the preceding claims,
wherein the end section (E1) of the groove (8) close to the head lies in the longitudinal direction (L) between the threaded section (4) and the entrainment area (10).

5. Fastening element (1) according to one of the preceding claims,
wherein the entrainment area (10) has the same core diameter and/or outer diameter as the threaded section (4).

6. Fastening element (1) according to one of the preceding claims,
wherein the entrainment area (10) has entrainment structures on its outer circumference,
wherein the entrainment structures enable positive torque transmission in the longitudinal direction (L).

7. Fastening element (1) according to one of the preceding claims,
wherein the entrainment structure is a spline and/or a thread.

8. Fastening element (1) according to one of the preceding claims,
wherein the end section (E1) of the groove (8) close to the head, in particular when viewed in the longitudinal direction (L), is arranged in an annular groove (14) running around the longitudinal direction (L).

9. Fastening element (1) according to one of the preceding claims,
wherein the fastening element (1) has an eccentric structure (16),
wherein the eccentric structure (16) is rotationally fixed about the longitudinal direction (L) to the screw element (2).

10. Fastening element (1) according to one of the preceding claims,
wherein the eccentric structure (16) is formed in one piece with the screw element (2), or
whereby the eccentric structure (16) is a separate component.

11. Fastening element (1) according to one of the preceding claims,
wherein the eccentric structure (16) is arranged closer to the head (6) in the longitudinal direction (L) than the end section (E1) of the groove (8) close to the head and/or than the entrainment area (10) and/or than the threaded section (4),
wherein the eccentric structure (16) is advantageously arranged directly adjacent to the head (6) in the longitudinal direction (L).

12. Adjustment system (50) comprising a fastening element (1) according to one of claims 1 to 11 and an eccentric element (20),
wherein the eccentric element (20) has an anti-rotation structure (22),
wherein the anti-rotation structure (22) engages in the groove (8) in such a way that rotation of the eccentric element (20) about the longitudinal direction (L) relative to the screw element (2) is positively prevented.

13. Method of manufacturing a fastening element (1) according to one of the preceding claims 1 to 11 comprising the steps of:
- Providing a blank;
- Rolling of a threaded section (4);
- In particular, forming the blank in such a way that a head (6) is formed;
- Forming the blank in such a way that a groove (8) is created,
wherein the groove (8) has an end section (E1) close to the head and a distal end section (E2),
wherein the end section (E1) close to the head is arranged closer to the head (6) in the longitudinal direction (L) than the threaded section (4),
wherein the groove (8) extends at least partially through the threaded section (4).

## Revendications

1. Elément de fixation (1) comprenant un élément de vis (2),
dans lequel
l'élément de vis (2) s'étend le long d'une direction longitudinale (L),
l'élément de vis (2) présente une portion filetée (4), une tête (6) et une rainure (8),
la rainure (8) s'étend en particulier le long de la direction longitudinale (L),
la rainure (8) présente une portion d'extrémité (E1) proche de la tête et une portion d'extrémité (E2) distale,
la portion d'extrémité (E1) proche de la tête est disposée plus près de la tête (6) que la portion filetée (4) dans la direction longitudinale (L),
la rainure (8) s'étend au moins partiellement à travers la portion filetée (4), l'élément de vis (2) a une classe de résistance supérieure à 10.9 ou égale à 10.9,
dans un plan de coupe dont la normale est parallèle à la direction longitudinale (L), la rainure (8) présente des portions de fond arrondies et/ou des portions latérales arrondies,
un rapport entre le rayon de l'arrondi de la portion de fond et/ou de la portion latérale de la rainure (8) et le diamètre de la portion filetée (4) est compris dans une plage de 0,1 à 0,5, de préférence dans une plage de 0,2 à 0,3,
**caractérisé en ce que**
la rainure (8) est estampée et/ou laminée.

2. Elément de fixation (1) selon la revendication 1,
dans lequel la rainure (8) s'étend entièrement à travers la portion filetée (4).

3. Elément de fixation (1) selon l'une des revendications précédentes,
dans lequel l'élément de vis (2) présente une zone d'entraînement (10),
la zone d'entraînement (10) est disposée, en particulier dans la direction longitudinale (L), plus près de la tête (6) que la portion d'extrémité (E1) de la rainure (8) proche de la tête et/ou que la portion filetée (4).

4. Elément de fixation (1) selon l'une des revendications précédentes,
dans lequel la portion d'extrémité (E1) de la rainure (8) proche de la tête est située, dans la direction longitudinale (L), entre la portion filetée (4) et la zone d'entraînement (10).

5. Elément de fixation (1) selon l'une des revendications précédentes,
dans lequel la zone d'entraînement (10) présente le même diamètre de coeur et/ou externe que la portion filetée (4).

6. Elément de fixation (1) selon l'une des revendications précédentes,
dans lequel la zone d'entraînement (10) présente des structures d'entraînement sur son pourtour extérieur,
les structures d'entraînement permettent une transmission du couple par complémentarité de forme autour de la direction longitudinale (L).

7. Elément de fixation (1) selon l'une des revendications précédentes,
dans lequel les structures d'entraînement sont une cannelure et/ou un filetage.

8. Elément de fixation (1) selon l'une des revendications précédentes,
dans lequel la portion d'extrémité (E1) de la rainure (8) proche de la tête, vue en particulier dans la direction longitudinale (L), est disposée dans une rainure annulaire (14) périphérique autour de la direction longitudinale (L).

9. Elément de fixation (1) selon l'une des revendications précédentes,
dans lequel l'élément de fixation (1) présente une structure excentrée (16),
la structure excentrée (16) est fixe en rotation autour de la direction longitudinale (L) par rapport à l'élément de vis (2).

10. Elément de fixation (1) selon l'une des revendications précédentes,
dans lequel la structure excentrée (16) est formée d'une seule pièce avec l'élément de vis (2), ou
la structure excentrée (16) est un composant séparé.

11. Elément de fixation (1) selon l'une des revendications précédentes,
dans lequel la structure excentrée (16) est disposée, dans la direction longitudinale (L), plus près de la tête (6) que la portion d'extrémité (E1) de la rainure (8) proche de la tête et/ou que la zone d'entraînement (10) et/ou que la portion filetée (4),
la structure excentrée (16) est avantageusement disposée immédiatement à la suite de la tête (6) dans la direction longitudinale (L).

12. Système de réglage (50) comprenant un élément de fixation (1) selon l'une des revendications 1 à 11 et un élément excentré (20),
dans lequel l'élément excentré (20) présente une structure anti-rotation (22),
la structure anti-rotation (22) s'engage dans la rainure (8) de telle sorte qu'une rotation de l'élément excentré (20) autour de la direction longitudinale (L) par rapport à l'élément de vis (2) est empêchée par complémentarité de forme.

13. Procédé de fabrication d'un élément de fixation (1) selon l'une des revendications précédentes 1 à 11, comprenant les étapes consistant à :
- fournir une ébauche ;
- laminer une portion filetée (4) ;
- en particulier, déformer l'ébauche de manière à obtenir une tête (6) ;
- déformer l'ébauche de manière à obtenir une rainure (8),
dans lequel
la rainure présente une portion d'extrémité (E1) proche de la tête et une portion d'extrémité (E2) distale,
la portion d'extrémité (E1) proche de la tête est disposée, dans la direction longitudinale (L), plus près de la tête (6) que la portion filetée (4),
la rainure (8) s'étend au moins partiellement à travers la portion filetée (4).
